# EUROPÄISCHE PATENTANMELDUNG

(11) **EP 0 644 076 A1**
(43) Veröffentlichungstag der Anmeldung: **22.03.1995**
(21) Anmeldenummer: 94113549.3
(22) Anmeldetag: 30.08.1994
(51) Int. Cl.: B60K 1/04

(54) **Vorrichtung zur Aufnahme einer Energiespeichereinheit in einer Wanne für ein Kraftfahrzeug**

(30) Priorität: 03.09.1993 DE 4329861
(71) Anmelder: HOTZENBLITZ MOBILE GmbH & Co. KG., D-79837 Ibach (DE)
(72) Erfinder: Albiez, Thomas, D-79837 Ibach (DE)
(74) Vertreter: Dosterschill, Peter, Dr.

(57) **Zusammenfassung**

Die Erfindung betrifft eine Vorrichtung zur Aufnahme einer Energiespeichereinheit (19) in einer Wanne (8) für ein Kraftfahrzeug. Die Wanne (8) ist modulartig ausgestaltet und dient der Aufnahme der Energiespeichereinheit (19) und/oder einer Antriebseinheit (24) und ist von der Unterseite des Kraftfahrzeuges in dieses einführbar und mit diesem lösbar befestigbar.

## Beschreibung

Die Erfindung betrifft eine Vorrichtung zur Aufnahme einer Energiespeichereinheit in einer Wanne für ein Kraftfahrzeug nach dem Oberbegriff des Patentanspruchs 1.

Aus einem Firmenprospekt der Firma Hotzenblitz Mobile GmbH & Co. KG, D-79837 Ibach: "Umsteigen. Für die Fahrt in eine lebenswerte Zukunft" (Erscheinungsjahr 1992) ist bereits ein Elektrokraftfahrzeug bekannt, bei dem Akkumulatoren bzw. Batterien im Bereich der Fahrzeugmitte zwischen den Fahrzeugachsen angeordnet sind. Derartige Akkumulatoren sind relativ schwer. Beispielsweise wiegt eine für dieses Fahrzeug bestimmte Batterie mehr als 300 kg. Ferner hat diese Batterie bezogen auf das Fahrzeug große Abmessungen, so daß die Batterie nur schwer handzuhaben ist.

Aus der DE-OS 2 720 353 ist eine Batteriepaketeinheit bekannt, die lösbar an einem Fahrzeug befestigt ist. Die Elektroantriebsvorrichtung des Fahrzeugs, die von der Batteriepaketeinheit gespeist wird, wird dabei im Motorraum vorn im Fahrzeug nach Entfernung des ursprünglich enthaltenen Verbrennungsmotors montiert, während das Batteriepaket unter dem Fahrgestell in der Mitte des Fahrzeuges angeordnet ist. Das Batteriepaket weist eine Wannenkonstruktion in Dreipunktbefestigung mit Verstärkung auf. Die Wanne ist jedoch nicht modulartig ausgestaltet. Weiterhin dient die Wanne nur der Aufnahme des Batteriepakets, nicht aber einer Antriebseinheit.

Aus ETZ-A 94 (1973) Heft 11, Seiten 679-682 ist ein Elektrofahrzeug mit einer Bodenanlage in selbsttragender Kunststoffsandwichbauweise bekannt, wobei eine raumsparende Integration der elektrischen, elektronischen und mechanischen Komponenten innerhalb der Bodengruppe vorgesehen ist. Es ist nicht vorgesehen, bei einer Auswechslung der Batterie auch die gesamte Bodenanlage auszuwechseln.

Aus der DE-OS 29 25 393 C2 ist eine Vorrichtung zum Ein- und Ausbringen eines Energiespeichers bekannt. Dabei sind fahrzeugeigene Hubmittel vorgesehen, die als Zuglaschen ausgeführt sind. Der Energiespeicher ist unter dem Ladeboden angeordnet und besteht aus mehreren kleinen Akkumulatorzellen, die zu einem großen, in sich tragfähigen und formstabilen Blech aufgebaut sind. Der Rahmenboden des Fahrzeuges wird durch mehrere Längsträger und mehrere quer über die Längsträger hinweglaufenden Querträger gebildet, wodurch seitlich offene Batterieaufnahmeräume geschaffen werden. Eine Auswechselbarkeit der Rahmenbodenkonstruktion zur Aufnahme des Energiespeichers ist nicht vorgesehen.

Ziel der Erfindung ist es, eine Vorrichtung der eingangs genannten Art bereitzustellen, welche erweiterte Einsatzmöglichkeiten für das Kraftfahrzeug hinsichtlich der Versorgung mit Energie und/oder hinsichtlich des Antriebsaggregats schafft.

Dieses Ziel wird mit einer Vorrichtung nach dem Patentanspruch 1 erreicht.

Die Erfindung ist mit einer Mehrzahl von Vorteilen verbunden. Die Batterie bzw. Energiespeicher- und/oder die Antriebseinheit ist in das Kraftfahrzeug einführbar, ohne daß irgendwelche Arbeiten im Fahrgastinnenraum vorzunehmen sind. So sind beispielsweise Fahrgastsitze oder Bodenabdeckungen im Fahrgastraum nicht zu entfernen. Die von unten mit dem Fahrzeugchassis verschraubte Wanne hat unter Montageaspekten den Vorteil, daß die Batterien in der Wanne vormontiert und gegebenenfalls vorverkabelt werden können. Dies ermöglicht sowohl eine einfache und schnelle Montage als auch eine ebensolche schnelle und einfache Austauschbarkeit im Falle eines Batteriedefekts oder beim Ersetzen verbrauchter Batterien durch aufgeladene Batterien.

Wartungsarbeiten bzw. Arbeiten zum Austausch einzelner Komponenten bzw. der gesamten Einheit lassen sich damit in relativ einfacher Weise ausführen. Dabei erweist sich die wannenförmige Ausgestaltung der Einheit als in besonderer Weise einfach handhabbar.

Ein besonderer Vorteil der erfindungsgemäßen Vorrichtung wird durch den modularen Aufbau erzielt. Der modulartige Aufbau ermöglicht neue Einsatzmöglichkeiten von Kraftfahrzeugen, insbesondere von elektrisch angetriebenen Fahrzeugen. Energiespeichereinheiten lassen sich einfach und in relativ kurzer Zeit (wenige Minuten) an entsprechenden "Tankstellen" austauschen, so daß der Einsatzradius elektrisch angetriebener Fahrzeuge sich praktisch kaum vom Einsatzradius von Fahrzeugen unterscheidet, die durch einen Verbrennungsmotor angetrieben werden.

Die erfindungsgemäße vorgesehene Modularität ermöglicht darüber hinaus, nicht nur die Energiespeichereinheit sondern auch eine Antriebseinheit einfach und schnell auszuwechseln. So kann die Wanne des Fahrzeugs beispielsweise in Städten eine Batterie und einen Elektromotor aufnehmen. An Stadtgrenzen läßt sich das komplette Wannenmodul mit Batterie und Elektromotor gegen ein Wannenmodul mit einem Tank und einem Verbrennungsmotor austauschen. Damit läßt sich ein Kraftfahrzeug gemäß der Erfindung je nach Verfügbarkeit entsprechend ausgestalteter Wannenmodule in Stadtbereichen umweltgerecht betreiben, ohne daß außerhalb der Stadtbereiche auf den herkömmlichen Betrieb verzichtet werden muß. Die Erfindung ermöglicht auch in einfacher Weise den Austausch verschiedener Typen von Verbrennungsmaschinen, z. B. von Benzin- bzw. Erdgasmotoren, so daß sich auch in dieser Weise ein umweltfreundlicher Betrieb von Kraftfahrzeugen erzielen läßt.

Nach einer weiteren vorteilhaften Ausführungsform der Erfindung ist die Stromversorgungseinheit in einem beheizbaren Raum angeordnet, so daß die Eigenschaften der Batterien bei relativ niedrigen Außentemperaturen verbessert werden.

Eine materialminimierende vorteilhafte Ausführungsform der Erfindung besteht darin, daß die Unterseite der Wanne mindestens einen Teil der Unterseite des Kraftfahrzeuges bildet.

Die Wanne ist mindestens in ihrem Bodenbereich einstückig ausgebildet. Damit erfolgt ein weitgehend gleichmäßiger Wärmeübergang zwischen Fahrzeuginnenraum und der äußeren Atmosphäre. Ein Vorteil dieser Ausführungsform besteht darin, daß der durch die Wanne gebildete Raum zu jedem Zeitpunkt im wesentlichen dieselbe Temperatur aufweist.

Diese Temperaturhomogenität ist insbesondere von außerordentlicher Bedeutung, wenn in der Wanne Bleibatterien, wie z.B. 12 Volt-Blöcke, gelagert sind. Die erfindungsgemäß erzielte Temperaturhomogenität führt zu im wesentlichen denselben Batterietemperaturen, und damit zu denselben Batteriekapazitäten und damit auch zu demselben Entladeverhalten. Frühzeitige Ausfälle aufgrund unterschiedlichen Entladeverhaltens werden damit vermieden.

Ein kompakter Aufbau des Kraftfahrzeugs ergibt sich, wenn nach einer weiteren vorteilhaften Ausführungsform der Erfindung die Vorrichtung einen Raum bildet, der mindestens teilweise im Fahrgastraum des Kraftfahrzeuges angeordnet ist. Auf diesem durch die Vorrichtung gebildeten Raum kann zugleich ein Fahrgastsitz angeordnet sein. Damit kommt dem Vorrichtungsraum eine doppelte Funktion zu.

Weitere Merkmale, Ziele und Vorteile der Erfindung werden nun im folgenden anhand der Figuren beschrieben.

Es zeigen:
- Fig. 1: ein Kraftfahrzeug mit einer erfindungemäßen Vorrichtung zur Aufnahme einer Energiespeicher- und/oder Antriebseinheit;
- Fig. 2 und 3: Grundrisse eines Raums zur Aufnahme einer Energiespeicher- und/oder Antriebseinheit nach einer ersten und zweiten Ausführungsform; und

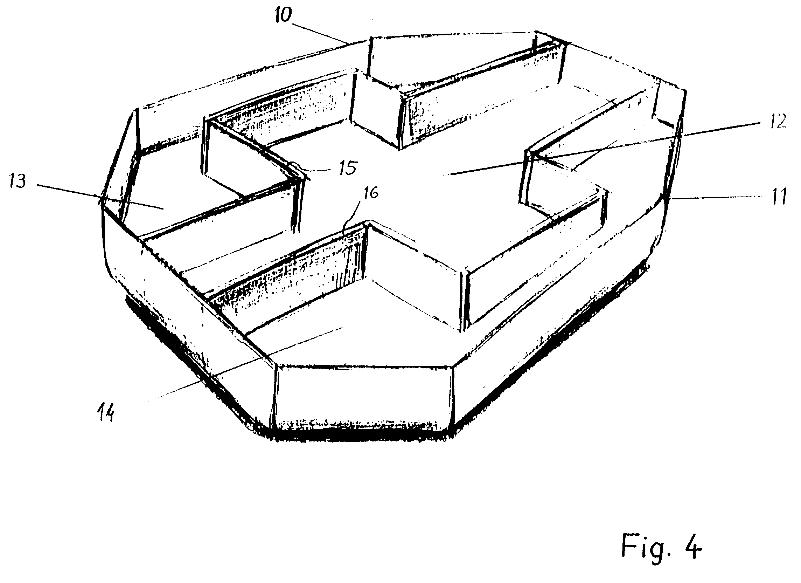

- Fig. 4 und 5: perspektivische Ansichten des Raums nach den Fig. 2 und 3.

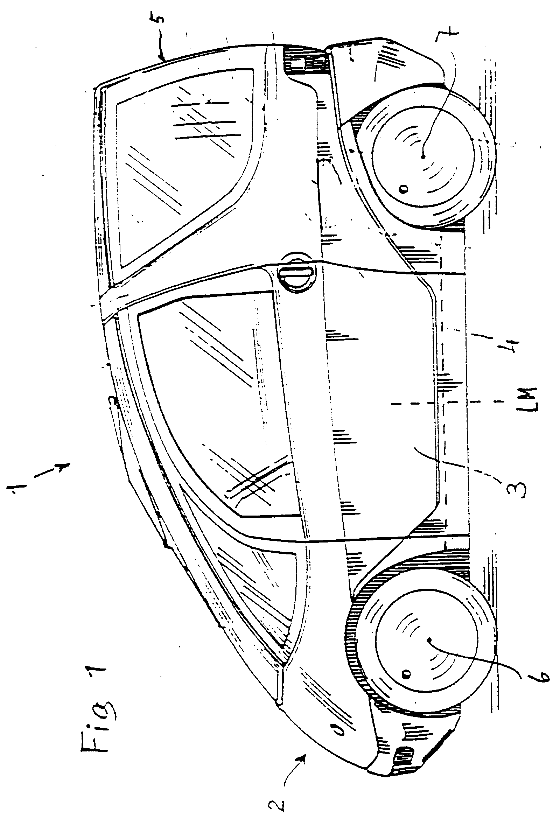

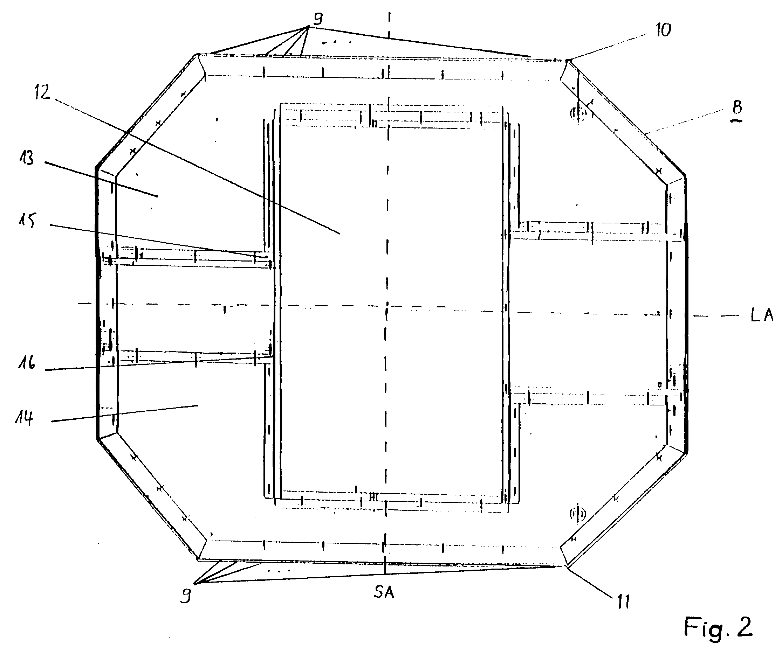

Das in Fig. 1 dargestellte Fahrzeug ist insbesondere ein Fahrzeug, das einen von Akkumulatoren bzw. Batterien gespeisten elektromotorischen Antrieb aufweist. In Fig. 1 ist die Karosserie mit 1 bezeichnet, ihr vorderer Teil mit 2, eine seitliche Einstiegstür mit 3, der Türrahmen mit 4, der hintere Teil der Karosserie mit 5. Eine im unteren Bereich des Kraftfahrzeugs eingezeichnete horizontale, gestrichelte Linie bezeichnet die Lage einer Wanne für eine Energiespeicher- und/oder Antriebseinheit (Motor). Die Energiespeichereinheit ist insbesondere eine Batterie und/oder ein Tank. Als Antriebseinheit kann ein Elektromotor und/oder ein Verbrennungsmotor (z. B. ein Erdgasmotor) verwendet werden. Diese Energiespeicher- und/oder Antriebseinheit ist zwischen der vorderen Kraftfahrzeugachse 6 und der hinteren Kraftfahrzeugachse 7 angeordnet. Insbesondere ist die Batterie im Bereich der Fahrzeugmitte (gestrichelte vertikale Linie LM in Fig. 1) bezogen auf die Längsabmessung des Fahrzeugs angeordnet. Die Batterie ist zugleich auch im Bereich der Fahrzeugmitte, bezogen auf die seitlichen Abmessungen des Fahrzeugs, angeordnet (gestrichelte Linie LA in Fig. 2).

Wie weiterhin aus Fig. 1 zu entnehmen ist, ist die Energiespeicher- und/oder Antriebseinheit im Bodenbereich des Kraftfahrzeugs angeordnet. Diese Einheit ist insbesondere im Schwerpunkt des Fahrzeugunterbereichs angeordnet. Diese Anordnung bewirkt einen entsprechend tiefen Schwerpunkt des Gesamtfahrzeugs einschließlich der montierten Energiespeicher- und/oder Antriebseinheit und ein sicheres Fahrverhalten. Die Batterie kann großräumig ausgestaltet sein und sich über einen weiten Bereich der Grundfläche des Fahrzeugs erstrecken.

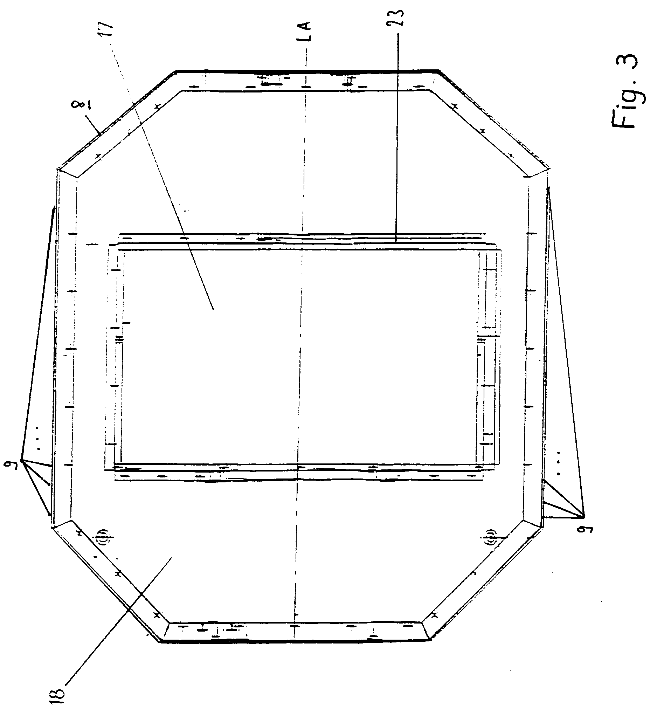

Fig. 2 zeigt eine Draufsicht eines wannenförmigen Raumes 8, der der Aufnahme einer Bleibatterie dient. Dieser Raum ist beispielsweise achteckig ausgebildet, wobei die beiden in Fig. 2 bzw. in Fig. 3 horizontal eingezeichneten Seiten formschlüssig mit den Seiten des Kraftfahrzeugs beispielsweise durch Schrauben lösbar verbindbar sind. Im Rahmen der Wanne sind Bohrungen 9 (Fig. 2 und 3) vorgesehen, die der Aufnahme von Schrauben dienen, mit denen die Wanne 8 und das Fahrzeugchassis verbunden werden.

Die Wanne ist in Räume 12, 13 und 14 aufgeteilt. Bei Verwendung einer Bleibatterie wird der Raum 12 für die Bleibatterie genutzt, während die Räume 13 und 14 bei dieser Ausführungsform für andere Zwecke verfügbar sind. Die Räume sind symmetrisch zu der Längsachse LA des Fahrzeugs (in Fig. 2 horizontal verlaufend) ausgestaltet. Zugleich sind die Räume 12, 13 und 14 auch symmetrisch zu der Fahrzeugmitte bezüglich der Längsrichtung (Linie SA in Fig. 2 vertikal verlaufend) ausgestaltet.

Die Räume 12, 13 und 14 sind durch Wandungen 15 und 16 voneinander getrennt. Diese Wandungen erstrecken sich in den Fahrgastraum und dienen dort zugleich als Auflage für einen oder zwei, insbesondere nebeneinander angeordnete Fahrgastsitze.

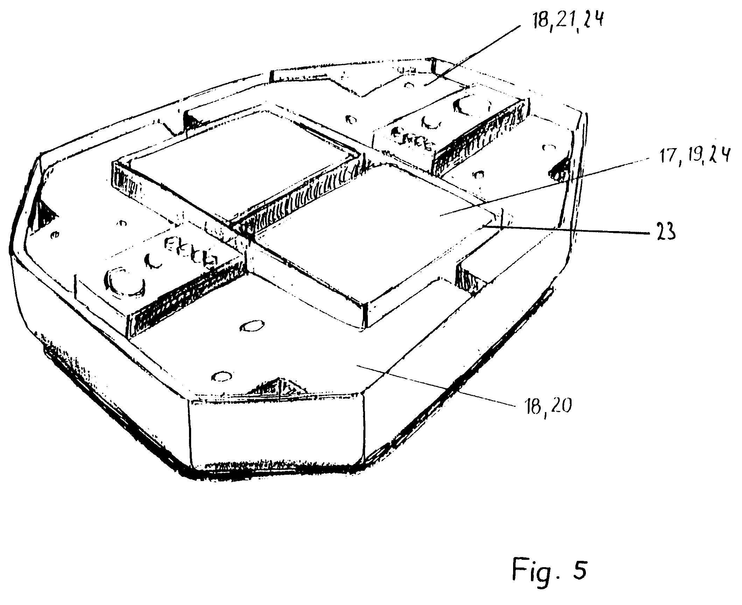

Die Fig. 3 und 5 zeigen ebenfalls eine Wanne 8 (nach einer zweiten Ausführungsform) mit zwei Räumen 17 und 18, die durch eine Wandung 23 begrenzt ist. Die Wandung 23 erstreckt sich in den Fahrgastraum. Diese Wanne 8 dient der Aufnahme einer Zink-Brom-Batterie.

Im Raum 17 sind Zellenpakete 19 der Batterie angeordnet, während im Raum 18 zwei Tanks 20, 21 mit beiden elektrochemisch aktiven Stoffen in flüssiger Form (Elektrolyte) angeordnet sind.

Die Zellenpakete 19 im Raum 17 bestehen aus Polyäthylenkammern mit eingearbeitetem Kunststoff. In jeder Kammer befindet sich eine mikroporöse Polyäthylenmembran, die die Elektrolyte physikalisch getrennt hält, sie aber trotzdem elektrochemisch miteinander reagieren läßt. Die Wanne 8 nach dieser Ausführungsform weist ebenfalls Bohrungen 9 für ihre Befestigung am unteren Chassis auf.

Die Abmessungen der Wanne 8 sind bei beiden Ausführungsformen, die für unterschiedliche Batterietypen (Blei, Zink-Brom) ausgelegt sind, gleich; sie unterscheiden sich nur hinsichtlich ihrer inneren Ausgestaltung. Diese Modularität der Wanne 8 ermöglicht es, unterschiedliche Batterietypen nacheinander für dasselbe Fahrzeug vorzusehen, ohne daß es irgendwelcher Veränderungen an dem Fahrzeug bedarf.

Die in den Figuren dargestellte Batteriewanne bildet mit ihrer Unterseite gleichzeitig den Fahrzeugboden, mindestens jedoch einen Teil des Fahrzeugbodens. Die Wanne ist, wie bereits beschrieben, unten mit dem Chassis verbunden. Die Wanne besteht beispielsweise aus Kunststoff, einer Blechpreßkonstruktion, einer Schweißkonstruktion und/oder insbesondere aus einer steifen, hochfesten Aluminiumsandwichkonstruktion. Die verwendeten Materialien zeichnen sich einerseits durch ihre mechanische Festigkeit und andererseits durch ihr geringes spezifisches Gewicht aus. Damit sind die Batterien sowohl gegen Beschädigungen bei Unfällen geschützt, bei denen das Fahrzeug an der Vorderseite, an der Hinterseite oder an den Seiten beschädigt wird. Gleichzeitig ist die Batterie gegen Beschädigungen geschützt, die von der Fahrbahnfläche (Unebenheiten, loses Gestein usw.) ausgehen.

Ein weiterer Vorteil, insbesondere der Aluminiumsandwichkonstruktion, ist ein nahezu absolut glatter Unterboden des Fahrzeugs und damit ein entsprechend günstiges aerodynamisches Verhalten des Fahrzeugs.

Der Raum, in dem die Batterie angeordnet ist, ist gegen die Fahrgastzelle gasdicht abgeschlossen. Eine Zwangsentlüftung führt nach außen. Die Batterien sind in einem Raum angeordnet, so daß die Batterie im wesentlichen denselben Temperaturen ausgesetzt sind, so daß sie im wesentlichen dasselbe Verhalten beim Laden und insbesondere beim Entladen aufweisen.

Die von unten mit dem Fahrzeugchassis verschraubte Wanne 8 hat unter Montageaspekten den Vorteil, daß die Batterien in der Wanne vormontiert und gegebenenfalls vorverkabelt werden können. Dies ermöglicht sowohl eine einfache und schnelle Montage als auch eine ebensolche schnelle und einfache Austauschbarkeit im Falle eines Batteriedefekts.

Die Wanne 8 ist zumindest in ihrem Bodenbereich einstückig ausgestaltet, wobei ein doppelter Boden vorgesehen sein kann.

Die Räume der Wanne, in denen die Batterien angeordnet sind, können insbesondere von der Fahrgastraumheizung beheizbar sein, so daß den Batterien von dieser Heizung gebildete Warmluft zugeführt wird.

Die Wandungen 15, 16 bzw. 23 erstrecken sich in den Fahrgastraum und bilden eine Auflage für einen oder mehrere Fahrgastsitze.

## Patentansprüche

1. Vorrichtung zur Aufnahme einer Energiespeichereinheit in einer Wanne (8) für ein Kraftfahrzeug, insbesondere für ein mit einem Elektromotor angetriebenes Fahrzeug, die im Bereich der Fahrzeugmitte am Fahrzeugboden angeordnet ist und von der Unterseite des Kraftfahrzeuges am Fahrzeugboden befestigbar ist,
**dadurch gekennzeichnet, daß**
die Vorrichtung ein Modul in Form der Wanne (8) aufweist, welches die Energiespeicher- und/oder eine Antriebseinheit (24) des Kraftfahrzeuges aufnimmt.

2. Vorrichtung nach Anspruch 1, dadurch gekennzeichnet, daß die Wanne (8) beheizbar ist.

3. Vorrichtung nach Anspruch 2, dadurch gekennzeichnet, daß die Unterseite der Wanne (8) zumindest einen Teil der Unterseite des Kraftfahrzeugs bildet.

4. Vorrichtung nach Ansprüchen 2 oder 3, dadurch gekennzeichnet, daß die Wanne (8) mindestens in ihrem Bodenbereich einstückig ausgebildet ist.

5. Vorrichtung nach einem der Ansprüche 2 bis 4, dadurch gekennzeichnet, daß die Wanne (8) aus Kunststoff, einer Blechpreßkonstruktion, einer Schweißkonstruktion und/oder einer Aluminiumsandwichkonstruktion besteht.

6. Vorrichtung nach einem der vorstehenden Ansprüche, dadurch gekennzeichnet, daß die Energiespeichereinheit eine Batterie ist und in einem beheizbaren Raum der Wanne (8) angeordnet ist.

7. Vorrichtung nach einem der Ansprüche 2-6, dadurch gekennzeichnet, daß eine Fahrgastraumheizung thermisch mit der Wanne (8) verbunden ist.

8. Vorrichtung nach Anspruch 7, dadurch gekennzeichnet, daß von der Fahrgastraumheizung gebildete Warmluft der Energiespeichereinheit zuführbar ist.

9. Vorrichtung nach einem der vorstehenden Ansprüche, dadurch gekennzeichnet, daß die Vorrichtung einen Raum bildet, der sich mindestens teilweise in den Fahrgastraum des Kraftfahrzeugs erstreckt.

10. Vorrichtung nach Anspruch 9, dadurch gekennzeichnet, daß auf dem die Vorrichtungen bildenden Raum mindestens ein Fahrgastsitz angeordnet ist.
